# FASCICULE DE BREVET EUROPEEN

(11) **EP 3 463 948 B1**
(45) Date de publication et mention de la délivrance du brevet: **24.05.2023**
(21) Numéro de dépôt: 17730851.7
(22) Date de dépôt: 17.05.2017
(51) Int. Cl.: B60J 1/06, G09F 9/33, G02B 27/01, B32B 17/10

(54) **PARE-BRISE DE VEHICULE POUR AFFICHAGE TETE HAUTE, VEHICULE L'INCORPORANT ET FABRICATION**
FAHRZEUGSCHEIBE FÜR HEAD-UP-ANZEIGE, FAHRZEUG DAMIT UND HERSTELLUNG DAVON
VEHICLE WINDSCREEN FOR HEAD-UP DISPLAY, VEHICLE INCORPORATING SAME AND MANUFACTURE THEREOF

(30) Priorité: 26.05.2016 FR 1654743
(43) Date de publication de la demande: 10.04.2019
(73) Titulaire: SAINT-GOBAIN GLASS FRANCE, 92400 Courbevoie (FR)
(72) Inventeur: BAUERLE, Pascal, 80700 Roye (FR)
(74) Mandataire: Saint-Gobain Recherche
(86) Numéro de dépôt international: PCT/FR2017/051194
(87) Numéro de publication internationale: WO 2017/203133

(56) Documents cités:
- EP-A2- 0 420 228
- WO-A1-2004/009349
- WO-A1-2013/093351
- WO-A1-2015/041106
- WO-A2-2004/062908
- WO-A2-2007/077466
- DE-A1-102011 112 717

## Description

L'invention concerne un pare-brise de véhicule pour affichage tête haute ainsi qu'un véhicule comportant un tel pare-brise I et la fabrication d'un tel pare-brise.

Les systèmes de visualisation tête haute (appelé HUD ou Head Up Display) sont utiles dans tous types de véhicules, en particulier les véhicules automobiles.

Les systèmes de visualisation tête haute affichent des informations projetées sur un vitrage feuilleté, qui se réfléchissent vers le conducteur ou l'observateur. Ces systèmes permettent notamment de donner des informations au conducteur du véhicule sans que le conducteur éloigne son regard du champ de vision en avant du véhicule, afin de garantir la sécurité de la conduite. Le conducteur perçoit alors une image virtuelle qui se situe à une certaine distance derrière le pare-brise.

Si on utilise un vitrage feuilleté classique pour un tel système, le conducteur observe une image double : une première image réfléchie par la surface du pare-brise orientée vers l'intérieur de l'habitable et une seconde image réfléchie par la surface extérieure du pare-brise, ces deux images étant légèrement décalées l'une par rapport à l'autre. Ce décalage peut perturber la vision de l'information. Pour pallier ce problème, on peut utiliser un pare-brise feuilleté formé de deux feuilles de verre et d'un intercalaire en polyvinylbutyral (PVB) dont les deux faces extérieures ne sont pas parallèles mais en forme de coin, de sorte que l'image projetée par une source d'affichage et réfléchie par la face du pare-brise orientée vers l'habitacle soit pratiquement superposée à la même image provenant de la même source réfléchie par la face du pare-brise orientée vers l'extérieur. Pour réaliser ce vitrage feuilleté en forme de coin, on utilise une feuille intercalaire dont l'épaisseur décroît du bord supérieur du vitrage au bord inférieur.

Les documents WO 2004/062908, EP 0 420 228, WO 2007/077466, WO 2015/041106 A1, WO 2013/093351 A1, DE 10 2011 112717 A1 et WO 2004/009349 décrivent des pare-brises connus.

L'invention porte sur un pare-brise de véhicule pour affichage tête haute capable d'intégrer une ou d'autre signalisation lumineuse sans pénaliser l'affichage tête haute.

A cet effet, la présente demande a pour premier objet le pare-brise feuilleté de la revendication 1.

Le vitrage feuilleté comporte:
- un premier vitrage, en verre minéral, éventuellement clair, extraclair ou teinté notamment gris ou vert, de préférence bombé, formant vitrage extérieur, avec des première et deuxième faces principales respectivement dites face F1 et face F2, si véhicule automobile d'épaisseur E de préférence d'au plus 2,5mm, même d'au plus 2mm - notamment 1,9mm, 1,8mm, 1,6mm et 1,4mm- ou même d'au plus1,3mm ou d'au plus 1mm
- un intercalaire de feuilletage, éventuellement clair, extraclair ou teinté notamment gris ou vert, en matière polymérique de préférence thermoplastique et mieux encore en polyvinylbutyral (PVB), de préférence si véhicule automobile d'épaisseur e1 d'au plus 1,8mm, mieux d'au plus 1,2mm et même d'au plus 0,9mm (et mieux d'au moins 0,3mm et même d'au moins 0,6mm), notamment en retrait du chant du premier vitrage d'au plus 2mm et en retrait du chant d'un deuxième vitrage d'au plus 2mm, l'intercalaire de feuilletage ayant une section transversale diminuant en forme en coin du haut vers le bas du vitrage feuilleté,
- un deuxième vitrage, en verre minéral, de préférence bombé et de préférence clair ou extraclair voire teinté, formant vitrage intérieur, avec des troisième et quatrième faces principales respectivement face F3 et face F4, si véhicule automobile d'épaisseur de préférence inférieure à celle du premier vitrage, même d'au plus 2mm - notamment 1,9mm, 1,8mm, 1,6mm et 1,4mm- ou même d'au plus 1,3mm ou d'au plus 1mm, l'épaisseur totale des premier et deuxième vitrages étant de préférence strictement inférieure à 4mm, même à 3,7mm la face F2 et la face F3 étant les faces internes du vitrage feuilleté
- entre la face F2 et la face F3, une ou plusieurs diodes électroluminescentes inorganiques, chaque diode ayant une face émettrice apte à émettre en direction de la face F3 une lumière de signalisation, et chaque diode ayant une tranche, chaque diode étant d'épaisseur e2 submillétrique et même d'au moins 0,2mm Et, selon l'invention, pour chacune des diodes, l'intercalaire de feuilletage (un premier feuillet) comprend une ouverture borgne entourant la tranche de la diode, et notamment l'intercalaire de feuilletage est dans l'espace dit interdiodes entre diodes voisines qui sont dans des ouvertures distinctes.

La découpe totale tout autour du support PCB comme pratiqué dans l'art antérieur augmente le risque de mauvais assemblage (bulles, délamination, défauts esthétiques). Aussi, la présente invention propose des découpes locales de l'intercalaire de feuilletage dédiées aux diodes.

L'intercalaire de feuilletage est de préférence au plus près des diodes et de préférence en tenant compte de la tolérance de positionnement des diodes lors de la découpe choisie de préférence plus large que la largeur des diodes (même si l'intercalaire a de la souplesse).

Dans un mode de réalisation préférentiel, l'épaisseur restante Hf entre Fw et le fond de l'ouverture borgne étant de préférence d'au moins 0,1mm et même 0,2mm et d'au plus 0,5mm et même d'au plus 0,3mm et de préférence la surface avant de la diode est en contact avec le fond délimitant l'ouverture borgne ou espacé d'au plus 0,2mm ou d'au plus 0,1mm.

Dans un mode de réalisation préférentiel, on utilise un feuillet PVB classique avec des ouvertures traversantes de préférence (plus simples à faire) et un autre en coin ou encore un feuillet composite PVB/film plastique/PVb avec des ouvertures de préférence borgnes pour ne pas percer le film plastique et/ou la couche électroconductrice qu'il porte (contrôle solaire etc). La couche électroconductrice est pleine -donc distante de la ou des ouvertures borgnes- voire même le film plastique est plein donc distante de la ou des ouvertures borgnes.

Le PVB en coin a des épaisseurs évolutives et, selon l'emplacement des trous pour les diodes dans cet intercalaire, il y a un risque d'avoir soit une surépaisseur des LEDs vis-à-vis de ce PVB, menant à une pression locale des LEDs sur le verre pouvant entraîner la casse, soit une surépaisseur importante du PVB par rapport aux LEDs ce qui revient à emprisonner de l'air qui peut causer des problèmes qualité dans la suite. L'interface entre les PVB peut être discernable éventuellement.

Dans un autre mode de réalisation, on utilise un unique feuillet PVB en coin (PVB seul -mono ou multicouche- ou multi feuillets préassemblé avec des ouvertures borgnes.

Dans un mode de réalisation préféré l'intercalaire de feuilletage (les parois des ouvertures) est espacé d'au plus 0,5mm mieux d'au plus 0,2mm voire 0,1mm de la tranche des diodes et même est en contact avec la tranche des diodes. Dans le cas d'une ouverture borgne, alors l'ouverture peut être remplie par la diode (ou le groupe de diodes).

Dans un mode de réalisation préféré, e1 est subcentimétrique, de préférence entre 0,5 et 0,9mm (en particulier 0,76mm pour le PVB classique et par exemple 0,81mm pour le PVB acoustique). L'intercalaire de feuilletage peut être un PVB acoustique.

De préférence, l'ouverture borgne est dans un PVB éventuellement acoustique, ou encore dans un élément composite (préassemblé) PVB/film plastique (fonctionnel) ou PVB/film plastique (fonctionnel)/PVB, le film plastique, de préférence un PET, étant seul (coloré, teinté) ou étant un élément (transparent, incolore etc) porteur d'une couche fonctionnelle notamment électroconductrice (contrôle solaire etc).

Le film plastique fonctionnel avec ou sans couche électroconductrice peut couvrir de préférence la surface du vitrage feuilleté. Le film plastique fonctionnel seul peut par exemple être teinté, coloré (intentionnellement). Le film plastique avec couche électroconductrice peut être transparent et incolore.

Le film plastique fonctionnel est d'épaisseur d'au plus 0,2mm et de préférence d'au plus 0,1 mm encore d'au plus 0,05mm.

On préfère que la couche électroconductrice reste intègre (à des fins esthétiques, pour éviter les points chauds etc) et même le film plastique tel que PET reste intègre, sans trou borgne ou traversant -donc sans une partie de ladite ouverture borgne-.

Une diode peut être de type « chip on board » ou encore tout préférentiellement un composant monté en surface (SMD en anglais) comportant alors une enveloppe périphérique (souvent dénommée « packaging »).

Dans un mode de réalisation préféré, chaque diode, de préférence de puissance, étant un composant électronique incluant au moins une puce semiconductrice, et est équipée d'une enveloppe périphérique (souvent dénommée « packaging »), polymérique ou céramique, encapsulant la tranche du composant électronique (et définissant la tranche de la diode), entourant la puce semiconductrice.

L'enveloppe peut correspondre à l'épaisseur maximale (hauteur) e2 de la diode. L'enveloppe est par exemple en époxy. Une enveloppe polymérique peut éventuellement se tasser (l'épaisseur finale après feuilletage peut être inférieure à l'épaisseur initiale) lors du feuilletage. L'enveloppe (polymérique) peut être opaque.

L'enveloppe (monolithique ou en deux pièces) peut comprendre une partie formant embase porteuse de la puce et une partie formant réflecteur évasée en s'éloignant de l'embase plus haute que le réflecteur, et contenant une résine de protection et/ou une matière à fonction de conversion de couleur. On peut définir la surface avant comme la surface de cette matière couvrant la puce en retrait ou au niveau de la surface « avant » du réflecteur.

La diode peut comprendre une résine de protection ou une matière à fonction de conversion de couleur même juste sur la puce semi-conductrice. La pucesemiconductrice peut être noyée dans une matière (résine, etc).

La diode (chip on board ou SMD) peut être dénuée d'élément optique (au-dessus de la puce-semi conductrice (noyée ou non dans de la matière) pour faciliter une compacité.

De préférence les diodes sont des composants montés en surface sur la face avant d'un support de diodes notamment flexible par exemple une carte PCB et même les diodes ont une émission lambertienne ou quasi lambertienne.

Le support de diodes (carte PCB) peut être suffisamment flexible (souple) pour s'adapter aux courbures du vitrage feuilleté bombé.

Le support de diodes notamment flexible dépasse de la tranche du vitrage. Cela facilite l'alimentation électrique par exemple il n'est pas nécessaire de rajouter une alimentation électrique au sein du vitrage feuilleté (câble plat, fils, couches électroconductrices sur les faces F2 ou F3 des vitrages etc). Le support de diodes (flexible) peut être local par exemple couvrir moins de 10% de la surface du vitrage feuilleté, notamment dans une région périphérique du vitrage feuilleté (du pare-brise). Le support de diodes (flexible) peut sinon couvrir plus de 10% et même la surface du vitrage feuilleté.

Dans un mode de réalisation préféré, l'intercalaire de feuilletage est en PVB avec e1 allant de 0,5 à 0,9mm, les diodes sont des composants montés en surface de préférence sur la face avant (côté face F3) d'un support de diodes flexible comme une carte PCB, d'épaisseur e'2 d'au plus 0,2mm et même d'au plus 0,15mm. Le support de diodes notamment flexible dépasse de la tranche du vitrage.

La largeur de la carte PCB est de préférence d'au plus 5cm, mieux d'au plus 2cm, et même d'au plus 1cm. La largeur (ou longueur) d'une diode avec une seule puce semi conductrice, généralement diode de forme carrée, est de préférence d'au plus 5mm. La longueur d'une diode avec une pluralité des puces semi- conductrices (typiquement entourées par l'enveloppe), généralement de forme rectangulaire, est de préférence d'au plus 20mm mieux d'au plus 10mm.

La ou les diodes sont des composants montés en surface de préférence sur une face dite avant d'un support de diodes flexible qui est collé ou plaqué par sa face arrière contre la face F2, notamment collage par un adhésif (colle ou de préférence adhésif double face), d'épaisseur e3 avec e3≤0,1mm, mieux e3≤0,05mm -même tel que e3+e'2 est d'au plus 0,15mm mieux d'au plus 0,1mm-. Avec cet adhésif on préfère e3+et2≤e1 (surtout si présent en face arrière du PCB dans la zone des diodes).

Le collage est sur toute la longueur ou ponctuel, dans zone à diodes et/ou hors diodes.

Sinon, la ou les diodes sont par exemple des composants montés en surface de préférence sur une face dite avant d'un support de diodes flexible et un intercalaire de feuilletage (PVB, d'épaisseur classique, teinté et/ou acoustique) est également entre la face arrière du support de diodes flexible et la face F2.

En particulier, la ou les diodes sont en partie basse du pare-brise hors zone d'affichage tête haute, notamment plus en périphérie de la zone d'affichage tête haute.

La ou les diodes sont des composants montés en surface de préférence sur une face avant d'un support de diodes flexible (ou sur la face F2 avec une couche électroconductrice -en pistes et non-), la ou les diodes sont disposées dans une région du pare-brise dans laquelle le verre extérieur est opaque par une couche opaque notamment en émail de préférence en F2 et/ou dans laquelle le verre intérieur est opaque par une couche opaque notamment en émail de préférence en F4 et comportant alors au moins une épargne au droit des diodes

En particulier, la signalisation lumineuse par la ou les diodes est un moyen anti collision et/ou la ou l'une des diodes est un indicateur lumineux d'un interrupteur tactile (d'un dispositif électrocommandable entre la face F2 et F3 : OLED, valve optique ou SPD, élément chauffant à couche ou fils, écran) de préférence capacitif entre F2 et F3 ou sur la face F4.

Les diodes sont si nécessaire des diodes de puissances qui sont en fonctionnement sous alimentées électriquement en courant, de préférence avec un facteur d'au moins 10 et même d'au moins 20 (donc intensité /10 voire intensité/20) notamment de façon à maintenir une température inférieure à la température de ramollissement du matériau polymérique de l'intercalaire de feuilletage, en particulier d'au plus 130°C, mieux d'au plus 120°C et même d'au plus 100°C.

Ces diodes garantissent une excellente efficacité sans trop chauffer.

Par exemple pour des diodes alimentées en courant à 1A on choisit entre 50 et 100mA.

Les diodes inorganiques sont par exemple à base de phosphure de gallium, de nitrure de gallium, de gallium et d'aluminium.

Le support de diodes (carte PCB) peut être suffisamment flexible (souple) pour s'adapter aux courbures du vitrage feuilleté bombé.

Dans un mode de réalisation, le support de diodes comporte un film en matière plastique de préférence transparent (si nécessaire), de préférence en poly(éthylène téréphtalate) ou PET ou en polyimide, pourvue de pistes conductrices, notamment métalliques (cuivre etc) ou en oxyde conducteur transparent, de préférence transparentes et équipée des diodes montées en surface. Les pistes conductrices sont imprimées ou déposées par toute autre méthode de dépôt par exemple dépôt physique en phase vapeur. Les pistes conductrices peuvent aussi être des fils. On préfère que les pistes conductrices et le film soient transparents lorsqu'ils sont visibles c'est-à-dire qu'ils ne sont pas masquées par un élément (couche) de masquage (tel qu'un émail voire une peinture etc) notamment en face F4 ou F3. Les pistes conductrices peuvent être transparentes de par la matière transparente ou par leur largeur suffisamment fine pour être (quasi) invisibles. Les pistes visibles ou non peuvent être en cuivre par exemple isolées par des lignes (retrait de matière par gravure laser etc).

Des films de polyimide ont une meilleure tenue en la température plus élevée par rapport à l'alternative PET ou même PEN (poly(naphtalate d'éthylène).

De préférence, le support de diodes seul ou associé à un connecteur plat s'étend au moins jusqu'à la tranche du vitrage feuilleté, et de préférence dépasse de la tranche, par exemple est en forme coudée mieux en L, et entre la face arrière du support de diodes et la face F2, est logé un adhésif étanche à l'eau liquide d'épaisseur d'au plus 0,1mm et mieux d'au plus 0,05mm, notamment un adhésif double face. On préfère un tel adhésif à une solution de surmoulage. Il peut s'agir de l'adhésif de préférence transparent utilisé pour fixer (toute) la carte PCB.

Le support de diodes peut comporter une première partie (rectangulaire ou ronde) porteuse d'une ou des diodes et une deuxième partie pour la connectique (rectangulaire, moins large) débouchant et même dépassant sur la tranche du vitrage feuilleté. Cette deuxième partie peut être (beaucoup) plus longue que la première partie.

Le support de diodes peut être associé à un connecteur plat s'étendant jusqu'à la tranche du vitrage et même la dépassant. On préférence un connecteur flexible s'adaptant aux courbures du vitrage, comportant un plastique par exemple PEN, polymide. le connecteur plat peut être de largeur (dimension le long de la tranche) inférieure ou égale à la dimension du support (de diodes) notamment le long de la tranche.

Le vitrage peut comporter plusieurs groupes de diodes (et donc d'ouvertures borgnes) avec la même fonction ou des fonctions distinctes.

Pour avoir une surface lumineuse plus grande et/ou des couleurs différentes on peut avoir sur une même carte PCB plusieurs rangées de diodes ou encore accoler deux cartes PCB (au moins accoler les zones des PCB avec diodes).

Sur un support de diodes donné, les diodes peuvent émettre la même lumière ou une lumière de couleurs différente, de préférence pas en même temps.

Classiquement, les diodes sont en (au moins) une rangée formant une bande lumineuse le long d'un bord longitudinal ou latéral du pare-brise.

Classiquement, les diodes sont en (au moins) une rangée formant une bande lumineuse le long :
- d'un bord longitudinal du pare-brise (côté conducteur notamment), le support de diodes peut dépasser d'une tranche d'un bord latéral et même de l'autre bord latéral ou encore et/avec une partie de connectique dépassant de la tranche du bord longitudinal-
- ou d'un bord latéral du pare-brise (côté conducteur notamment), le support de diodes peut dépasser d'une tranche d'un bord longitudinal et même de l'autre bord longitudinal et/ou encore avec une partie de connectique dépassant de la tranche du bord latéral.

Naturellement, l'intercalaire de feuilletage peut être en contact direct avec la face F3 (respectivement F2) ou avec un revêtement fonctionnel classique sur cette face, notamment un empilement de couches minces (incluant une ou des couches argent) tel que : couche chauffante, antennes, couche de contrôle solaire ou basse émissivité ou une couche décor ou de masquage (opaque) comme un émail généralement noir.

Le support de diodes peut être dans le clair de vitre, espacée ou non des bords opaques (cadre émaillé en général). Par exemple on dispose la carte PCB le long d'un bord latéral ou longitudinal ou encore plus central notamment sensiblement à mi-chemin des bords latéraux et même plus proche du bord longitudinal inférieur (en position monté) que du bord longitudinal supérieur. Le plus souvent, il y a une couche opaque en face F2 et une couche opaque en face F4 voire F3. Leurs largeurs sont identiques ou distinctes.

Le support de diodes peut être agencé dans ou au voisinage de la région d'une couche opaque, notamment un émail (noir), le long d'un bord périphérique du vitrage feuilleté, généralement en face F2 et/ou face F4 ou encore en face F2 et/ou en face F3.

Dans ce premier mode de réalisation, les diodes voire tout le support de diodes peut être visible uniquement à l'intérieur, pour afficher les informations - comme un avertissement (anti collisions) à un conducteur ou même à toute autre personne - sans limiter la vue du conducteur à travers le pare-brise.

La carte PCB peut être disposée dans une région du pare-brise dans laquelle le verre intérieur est opaque par une couche opaque (la plus interne) comme un émail (noir) de préférence en F4 voire en F3. Cette couche opaque comporte alors au moins des ouvertures (par un masque au dépôt ou par retrait notamment laser) au droit des diodes. Cette couche opaque par exemple est sous forme d'un ensemble de motifs opaques géométriques ou non (en rond, rectangle, carré etc), de taille identiques ou distinctes (de taille de plus ou plus petite et/ou avec motifs de plus ou plus espacés en s'éloignant de la tranche). Des zones entre les motifs opaques sont au droit des diodes. Dans ces zones on peut ajouter une couche diffusante comme un émail blanc en face F4 voire en F3. La couche diffusante peut être espacée ou jointive avec cette couche opaque (la plus interne). De préférence, le pare-brise comporte en plus la couche opaque en face F2.

En particulier, les diodes peuvent être arrangées pour former une ou des lettres, un symbole (triangle, symbole de panne ou de danger etc), une ou des flèches (gauche et droite indicatrices du clignotant), en utilisant une ou plusieurs cartes PCB. On peut avoir autant de carte PCB et ensemble de diodes tel que décrit précédemment que nécessaire. Par exemple :
- un premier ensemble le long d'un bord latéral gauche de préférence plus près du bord longitudinal bas que haut,
- un deuxième ensemble le long d'un bord latéral droit de préférence plus près du bord longitudinal bas que haut,
- un troisième ensemble le long du bord longitudinal bas de préférence côté conducteur,
- un quatrième ensemble au centre de préférence plus près du bord longitudinal bas que haut

On peut changer de couleur en fonction du degré de sécurité ou encore allumer plus ou moins de diodes en fonction du degré de sécurité.

L'invention concerne bien entendu tout véhicule comportant un pare-brise avec une signalisation lumineuse qui est un moyen anti collision (sur (auto)route ou même en ville) notamment par détection d'une distance à la voiture (ou tout autre moyen de locomotion tel que moto, vélo, trottinette etc ou encore un animal) de devant (ou d'un objet ou d'une personne comme un piéton) trop courte, ou encore par détection d'une distance trop courte d'un objet ou d'une personne ou d'une voiture ou tout autre moyen de locomotion (vélo, moto etc) sur le côté de la voiture, côté gauche ou côté droit, et allumage des diodes de préférence en rouge ou, plus progressivement, en orange (ambre) puis en rouge, ou même avec trois ou plus niveaux donc couleurs

Comme diodes on peut citer la gamme des OSLON BLACK FLAT vendue par OSRAM. Pour la lumière rouge, on peut citer comme diode vendue par OSRAM : OSLON BLACK FLAT Lx H9PP. Pour la lumière orange (ambre), on peut citer comme diode vendue par OSRAM : LCY H9PP. Pour la lumière blanche on peut citer comme diode vendue par OSRAM : LUW H9QP ou KW HxL531.TE où x = est nombre de puces dans la diode (par exemple 4 ou 5).

Comme PCB flexible on peut citer la gamme des produits AKAFLEX^{®} (notamment PCL FW) de la société KREMPEL.

Dans un mode de réalisation du véhicule, il comporte au moins une unité de commande pour piloter les diodes et même au moins un capteur notamment pour détecter les situations dangereuses. Une unité de commande pour piloter les diodes peut être dans le vitrage feuilleté, sur ou en dehors de la carte PCB.

L'invention concerne enfin un premier procédé de fabrication du pare-brise feuilleté déjà décrit qui comporte les étapes suivantes:
- découpe automatique d'un premier feuillet d'intercalaire de feuilletage d'épaisseur constante de préférence d'au plus 0,9mm pour former une ou des ouvertures de préférence traversantes locales notamment dans la région basse du pare-brise,
- fourniture d'un deuxième feuillet, de préférence PVB, ayant une section transversale diminuant en forme en coin du haut vers le bas du vitrage feuilleté, deuxième feuillet de préférence plus proche de la face F3 et en contact avec le première feuillet,
- assemblage du vitrage feuilleté, avec des ouvertures plus larges que la taille des diodes de préférence plus grandes d'au plus 0,5mm ou même d'au plus 0,1mm.

De préférence :
- avant l'assemblage, la ou les diodes sont dans des ouvertures traversantes et est notamment en surépaisseur du premier feuillet d'au plus 0,2mm ou même d'au plus 0,1mm ou en retrait dans l'ouverture d'au plus 0,5mm et même d'au plus 0,3mm ou 0,2mm.

L'invention concerne enfin un deuxième procédé de fabrication du pare-brise feuilleté déjà décrit qui comporte les étapes suivantes:
- découpe automatique d'un premier feuillet d'intercalaire ayant une section transversale diminuant en forme en coin du haut vers le bas du vitrage feuilleté, de préférence d'au plus 0,9mm et supérieure à e2 pour former une ou des ouvertures locales borgnes notamment dans la région haute du pare-brise,
- assemblage du vitrage feuilleté, notamment avec des ouvertures plus larges que la taille des diodes de préférence plus grandes d'au plus 0,5mm ou même d'au plus 0,1mm.

De préférence, pour le premier ou le deuxième procédé :
- la ou les diodes (4) sont des composants montés en surface de préférence sur une face dite avant côté face F3 d'un support de diodes flexible, avec la face avant contre le premier feuillet.
- le premier feuillet de préférence PVB est éventuellement acoustique et/ou teinté ou préassemblé PVB/ film plastique notamment d'épaisseur d'au plus 0,2mm et même d'au plus 0,1mm ou d'au plus 0,05mm tel que PET fonctionnel (avec ou sans couche électroconductrice, notamment de contrôle solaire) ou PVB/ film plastique notamment d'épaisseur d'au plus 0,2mm et même d'au plus 0,1mm ou d'au plus 0,05mm tel que PET fonctionnel (avec ou sans couche électroconductrice)/PVB, le deuxième feuillet éventuel est clair ou extraclair

L'intercalaire de feuilletage quant à lui peut être en en polyvinylbutyral (PVB), ou en polyuréthane (PU), en copolymère éthylène/acétate de vinyle (EVA), formé à partir d'un ou plusieurs films, ayant par exemple une épaisseur entre 0,2mm et 1,1mm.

Un intercalaire acoustique peut comprendre au moins une couche dite centrale en matériau plastique viscoélastique aux propriétés d'amortissement vibro-acoustique notamment à base de polyvinylbutyral (PVB) et de plastifiant, et comprenant en outre deux couches externes en PVB standard, la couche centrale étant entre les deux couches externes.

Eventuellement l'une ou les deux couches externes a une section transversale diminuant en forme en coin du haut vers le bas du vitrage feuilleté, la couche en matériau plastique viscoélastique aux propriétés d'amortissement vibro-acoustique ayant une section transversale constante du haut vers le bas du vitrage feuilleté. Comme exemple de feuillet acoustique on peut citer le brevet EP0844075.

Le placement des diodes sur la face avant peut être manuel ou robotisé (plus précis).

Le support de diodes peut être positionné par rapport au vitrage (face arrière côté face F2) et contraindre la mise en place de l'intercalaire de feuilletage trouée avec de préférence une découpe de l'intercalaire de feuilletage avec excès sur le contour du vitrage (et découpe de l'excédent après mise en place du vitrage côté face avant), ou encore le support de diodes avec les diodes peut être positionné par rapport à l'intercalaire de feuilletage trouée et est contraint par la mise en place de ce dernier et avec de préférence avec une découpe de de l'intercalaire de feuilletage à la forme exacte du vitrage feuilleté.

Afin de limiter l'échauffement dans l'habitacle ou de limiter l'usage d'air conditionné, l'un des vitrages au moins (de préférence le verre extérieur) est teinté, et le vitrage feuilleté peut comporter également une couche de réfléchissant ou absorbant le rayonnement solaire, de préférence en face F4 ou en face F2 ou F3, en particulier une couche d'oxyde transparent électro-conducteur dite couche TCO (en face F4) ou même un empilement de couches minces comprenant au moins une couche TCO, ou d'empilements de couches minces comprenant au moins une couche d'argent (en F2 ou F3), la ou chaque couche d'argent étant disposée entre des couches diélectriques.

On peut cumuler couche (à l'argent) en face F2 et/ou F3 et couche TCO en face F4. La couche TCO (d'un oxyde transparent électro-conducteur) est de préférence une couche d'oxyde d'étain dopé au fluor (SnO₂:F) ou une couche d'oxyde mixte d'étain et d'indium (ITO).

D'autres couches sont possibles, parmi lesquelles les couches minces à base d'oxydes mixtes d'indium et de zinc (appelées « IZO »), à base d'oxyde de zinc dopé au gallium ou à l'aluminium, à base d'oxyde de titane dopé au niobium, à base de stannate de cadmium ou de zinc, à base d'oxyde d'étain dopé à l'antimoine. Dans le cas de l'oxyde de zinc dopé à l'aluminium, le taux de dopage (c'est-à-dire le poids d'oxyde d'aluminium rapporté au poids total) est de préférence inférieur à 3%. Dans le cas du gallium, le taux de dopage peut être plus élevé, typiquement compris dans un domaine allant de 5 à 6%.

Dans le cas de l'ITO, le pourcentage atomique de Sn est de préférence compris dans un domaine allant de 5 à 70%, notamment de 10 à 60%. Pour les couches à base d'oxyde d'étain dopé au fluor, le pourcentage atomique de fluor est de préférence d'au plus 5%, généralement de 1 à 2%.

L'ITO est particulièrement préféré, notamment par rapport au SnO₂:F. De conductivité électrique plus élevée, son épaisseur peut être plus faible pour obtenir un même niveau d'émissivité. Aisément déposées par un procédé de pulvérisation cathodique, notamment assisté par champ magnétique, appelé « procédé magnétron », ces couches se distinguent par une plus faible rugosité, et donc un plus faible encrassement.

Un des avantages de l'oxyde d'étain dopé au fluor est en revanche sa facilité de dépôt par dépôt chimique en phase vapeur (CVD), qui contrairement au procédé de pulvérisation cathodique, ne nécessite pas de traitement thermique ultérieur, et peut être mis en oeuvre sur la ligne de production de verre plat par flottage.

Par « émissivité », on entend l'émissivité normale à 283 K au sens de la norme EN12898. L'épaisseur de la couche basse émissivité (TCO etc) est ajustée, en fonction de la nature de la couche, de manière à obtenir l'émissivité voulue, laquelle dépend des performances thermiques recherchées. L'émissivité de la couche basse émissivité est par exemple inférieure ou égale à 0,3, notamment à 0,25 ou même à 0,2. Pour des couches en ITO, l'épaisseur sera généralement d'au moins 40 nm, voire d'au moins 50 nm et même d'au moins 70 nm, et souvent d'au plus 150 nm ou d'au plus 200 nm. Pour des couches en oxyde d'étain dopé au fluor, l'épaisseur sera généralement d'au moins 120 nm, voire d'au moins 200 nm, et souvent d'au plus 500 nm.

Par exemple la couche basse émissivité comprend la séquence suivante : sous-couche haut indice/sous-couche bas indice/ une couche TCO/ surcouche diélectrique optionnelle.

Comme exemple préféré de couche basse émissivité (protégée durant une trempe, on peut choisir sous-couche haut indice (<40 nm) / sous-couche bas indice (<30 nm) / une couche ITO/ surcouche haut indice (5 - 15 nm))/ surcouche bas indice (<90 nm) barrière/ dernière couche (< 10 nm).

On peut citer comme couche basse émissivité celles décrites dans le brevet US2015/0146286, sur la face F4, notamment dans les exemples 1 à 3.

Dans une réalisation préférée :
- le premier et/ou le deuxième vitrage est teinté
- et/ou l'une des faces F1 ou F2 ou F3 ou F4 -de préférence la face F4 - du vitrage feuillet, est revêtue d'une couche basse émissivité, notamment comprenant une couche d'oxyde transparent électro-conducteur (dite TCO) notamment un empilement de couches minces avec couche TCO ou un empilement de couches minces avec couche(s) d'argent
- et/ou l'intercalaire de feuilletage est teinté sur tout en partie de son épaisseur (notamment en dehors du côté de la surface la plus mineuse, souvent celle avec les altérations)
- et/ou un film additionnel (polymérique, comme un polyéthylène téraphtalate PET etc) teinté est entre les faces F2 et F3 ou (collé) en F4 voire en face F1.

En particulier, la face F4 du vitrage feuilleté, est revêtue d'une couche fonctionnelle transparente notamment basse émissivité, de préférence comprenant une couche TCO, dont une zone (alimentée électriquement, donc électrode) formant bouton tactile (pour piloter la première surface lumineuse).

La présente invention est à présent expliquée plus en détail en référence aux figures annexées dans lesquelles :

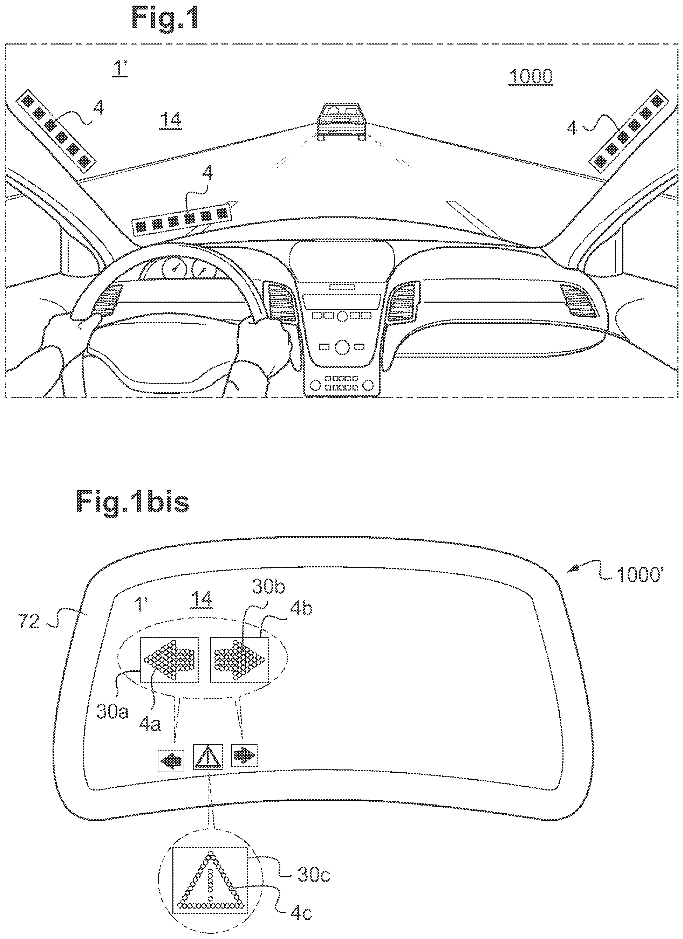

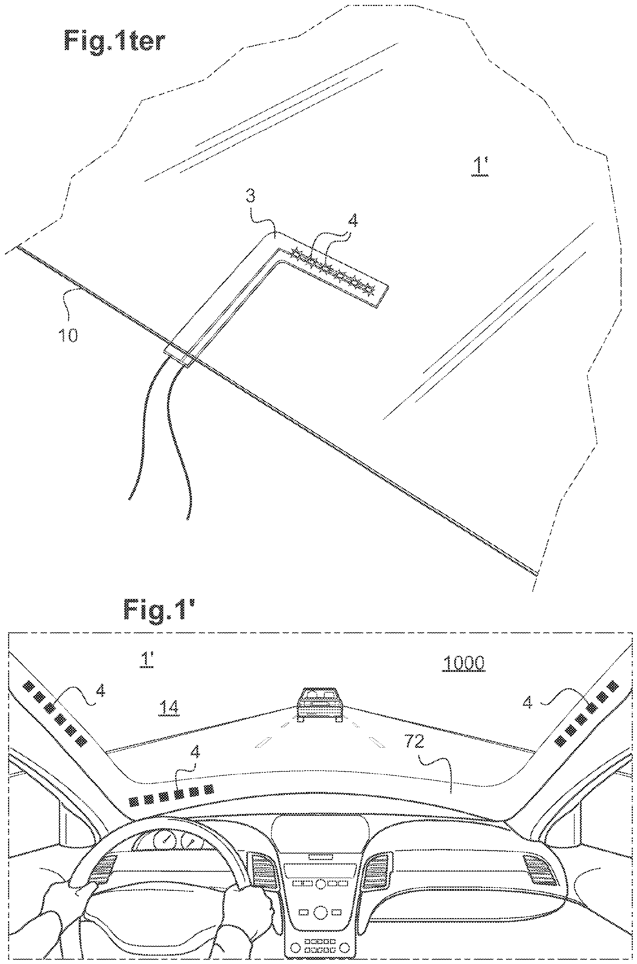

La figure 1 montre un pare-brise d'un véhicule automobile sur une route, pare-brise avec de la signalisation lumineuse selon l'invention.
La figure 1bis montre un autre pare-brise d'un véhicule automobile sur une route, pare-brise avec de la signalisation lumineuse selon l'invention.
La figure 1' montre un autre pare-brise d'un véhicule automobile sur une route, pare-brise avec de la signalisation lumineuse selon l'invention.
La figure 2 est une vue schématique de coupe transversale d'un pare-brise à signalisation lumineuse dans un premier mode de réalisation de l'invention tout comme les figures 2a, 2b, 2', 2"a, 3a, 3b, 4a, 4b, 5a, 5b,6a, 6b.
La figure 1ter montre un exemple de carte PCB avec les diodes

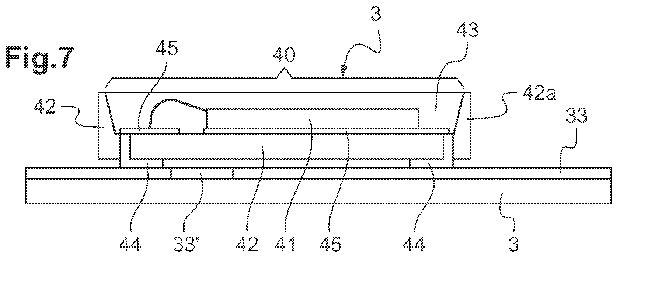

La figure 7 montre une diode montée en surface d'un support à diodes.

La figure 1 montre (à partir de la vision de l'intérieur du véhicule) un pare-brise 1000 d'un véhicule automobile roulant sur une route à trois voies avec une voiture devant.

Le pare-brise est un vitrage feuilleté avec de la signalisation lumineuse selon l'invention
- à l'aide d'un premier ensemble de six diodes 4 sur une première carte de circuit imprimé dite carte PCB intégrée entre les deux vitrages du vitrage feuilleté, diodes en une rangée disposées dans le clair de vitre dans une zone de bord du pare-brise le long du bord longitudinal inférieur éventuellement dans ou au voisinage d'une zone périphérique de masquage (émail opaque..) du vitrage extérieur (non représenté) ou même dans une zone avec une alternance zone de masquage (couche opaque, comme un émail opaque) et zone transparente (en regard d'une diode) du vitrage extérieur et/ou intérieur,
- à l'aide d'un deuxième ensemble de six diodes 4 sur une deuxième carte de circuit imprimé dite carte PCB intégrée entre les deux vitrages du vitrage feuilleté, diodes en une rangée disposées dans le clair de vitre dans une zone de bord du pare-brise le long du bord latéral (gauche), notamment côté conducteur, éventuellement dans ou au voisinage d'une zone périphérique de masquage (émail opaque...) du vitrage extérieur ou même dans une zone avec une alternance zone de masquage ( couche opaque, comme un émail opaque) et zone transparente (en regard d'une diode) du vitrage extérieur et/ou intérieur.
- à l'aide d'un troisième ensemble de six diodes 4 sur une troisième carte de circuit imprimé dite carte PCB intégrée entre les deux vitrages du vitrage feuilleté, diodes en une rangée disposées dans le clair de vitre dans une zone de bord du pare-brise le long du bord latéral droit notamment côté passager, éventuellement dans ou au voisinage d'une zone périphérique de masquage (émail opaque...) du vitrage extérieur ou même dans une zone avec une alternance zone de masquage ( couche opaque, comme un émail opaque) et zone transparente (en regard d'une diode) du vitrage extérieur et/ou intérieur

Ces diodes en particulier du premier ensemble peuvent émettre de la lumière rouge alertant le conducteur lorsque la voiture avant (ou tout autre moyen de locomotion ou encore un animal) est détectée trop proche. La lumière rouge peut être continue ou clignotante. La lumière choisie continue peut augmenter en intensité au fur et à mesure que la voiture de devant est proche ou à partir d'une distance prédéterminée dite distance à fort risque. La fréquence de lumière choisie clignotante peut augmenter au fur et à mesure que la voiture de devant est proche ou à partir d'une distance prédéterminée dite distance à fort risque.

Lorsque la voiture de devant est suffisamment éloignée (respect de la distance de sécurité), les diodes sont éteintes.

Ces diodes en particulier du deuxième ensemble peuvent émettre de la lumière rouge alertant le conducteur lorsqu'une voiture (ou tout autre moyen de locomotion ou encore un animal) est détectée trop proche sur le côté gauche de la voiture. La lumière rouge peut être continue ou clignotante. La lumière choisie continue peut augmenter en intensité au fur et à mesure que la voiture sur le côté est proche ou à partir d'une distance prédéterminée dite distance à fort risque. La fréquence de lumière choisie clignotante peut augmenter au fur et à mesure que la voiture sur le côté est proche ou à partir d'une distance prédéterminée dite distance à fort risque. Lorsque la voiture sur le côté est suffisamment éloignée (respect de la distance de sécurité), les diodes sont éteintes.

Ces diodes en particulier du troisième ensemble peuvent émettre de la lumière rouge alertant le conducteur lorsqu'une voiture (ou tout autre moyen de locomotion ou encore un animal) est détectée trop proche sur le côté droit de la voiture. La lumière rouge peut être continue ou clignotante. La lumière choisie continue peut augmenter en intensité au fur et à mesure que la voiture sur le côté est proche ou à partir d'une distance préderterminée dite distance à fort risque. La fréquence de lumière choisie clignotante peut augmenter au fur et à mesure que la voiture sur le côté est proche ou à partir d'une distance prédéterminée dite distance à fort risque. Lorsque la voiture sur le côté est suffisamment éloignée (respect de la distance de sécurité), les diodes sont éteintes.

Le système anti collision fonctionne sur n'importe quelle route : autoroute, en ville. Il peut servir aussi pour alerter de la présence trop rapprochée d'un objet ou d'un piéton.

La lumière de signalisation peut aussi passer d'une couleur (par exemple orange ou ambre) lorsque le véhicule à une distance à risque à une autre couleur par exemple rouge lorsque le véhicule à une distance plus courte encore plus dangereuse.

Dans ces cas, on prévoit autant de diodes que nécessaires par exemple une rangée avec une alternance de diodes rouges et de diodes orange ou une rangée par couleur. On peut aussi avoir au moins trois niveaux de signalisation (trois couleurs).

Le véhicule intègre au moins un capteur (de préférence un par ensemble de diodes) pour détecter ces situations dangereuses (non-respect de la distance de sécurité ou autres) et au moins une unité de commande pour piloter les diodes.

Les diodes ne sont pas nécessairement en rangée, notamment parallèle au bord du vitrage.

La ou les cartes PCB avec des diodes est de préférence dans le quadrant inférieur côté conducteur. Etant dans le clair de vitre on préfère une carte PCB transparente.

La figure 1bis montre un autre pare-brise d'un véhicule automobile, pare-brise 1000' avec de la signalisation lumineuse selon l'invention. Il diffère de celui de la figure 1 par le type de signalisation et par l'emplacement des deuxième et troisième cartes PCB.

Le premier ensemble de diodes 4c, sur un support 30C, forme un triangle avec si possible un point d'exclamation central. Il forme donc un signal de danger.

Les deuxième et troisième ensemble de diodes 4a et 4b, sur leur support 30a et 30b, forme des flèches indiquant que le clignotant est enclenché.

Pour combiner avec une fonction HUD, l'intercalaire de feuilletage présente en outre une section transversale diminuant en forme en coin du haut vers le bas du vitrage feuilleté.

La figure 1ter est une vue schématique d'une carte PCB 3 en L avec les diodes 4 visibles au travers du verre 1' et une partie de connectique de la carte PCB sortant de la tranche 10 du vitrage feuilleté. La carte PCB peut être transparente (film polyimide par exemple avec des pistes transparentes) ou opaque par exemple avec des pistes de cuivre isolées par gravure laser (et masqué hors points lumineux).

La figure 1' montre un autre pare-brise d'un véhicule automobile sur une route, pare-brise avec de la signalisation lumineuse selon l'invention. Il diffère de celui de la figure 1 par l'emplacement plus en périphérie des trois cartes PCB, qui peuvent être opaques (support opaque et/ou pistes (fils etc) conductrices opaques par exemple en cuivre). La face F2 comporte un cadre plein de masquage 72 en émail noir de préférence et la face F4 14 (ou F3) un cadre de masquage en émail noir de préférence, avec des ouvertures au droit des diodes 4.

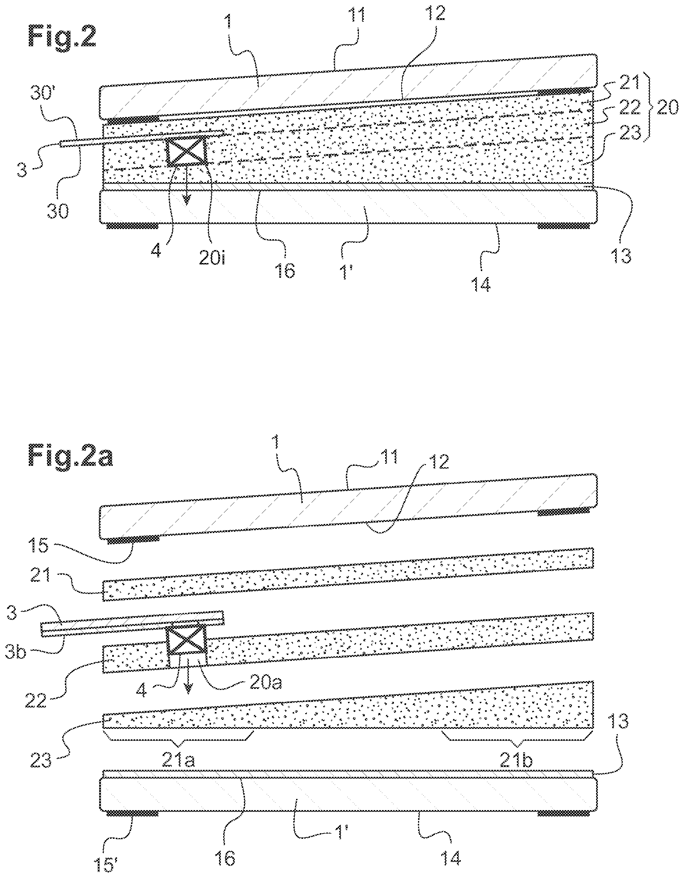

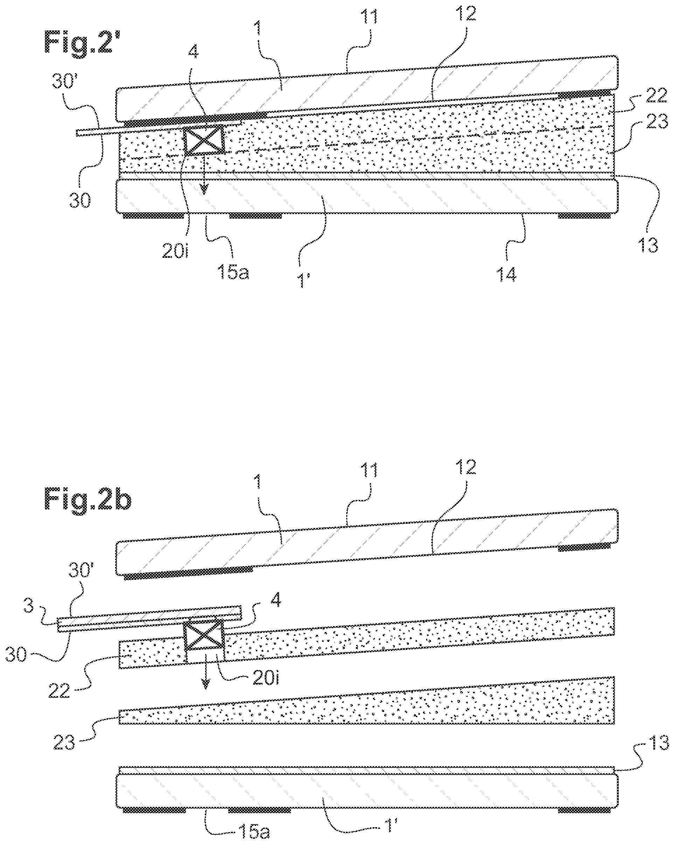

La figure 2 est une vue schématique de coupe transversale d'un pare-brise à signalisation lumineuse et à affichage tête haute dans un premier mode de réalisation détaillé de l'invention, comprenant un vitrage feuilleté bombé, comportant :
- un premier vitrage 1, par exemple en verre TSA et de 2,1mm d'épaisseur, formant vitrage extérieur, de préférence teinté, avec des première et deuxième faces principales 11, 12 respectivement dites face F1 -- et face F2, et une tranche 10
- un intercalaire de feuilletage 20 en matière polymérique, ici en PVB, de préférence clair, d'épaisseur submillimétrique de préférence présentant une section transversale diminuant en forme en coin du haut vers le bas du vitrage feuilleté, par exemple un PVB (RC41 de Solutia ou d'Eastman) d'épaisseur 0,76mm environ ou en variante si nécessaire un PVB acoustique (tricouche ou quadricouche) par exemple d'épaisseur 0,81mm environ, par exemple intercalaire en 3 feuillets PVB 21, 22, 23
- un deuxième vitrage 1', formant vitrage intérieur par exemple en verre TSA (ou clair ou extraclair) et de 2,1mm d'épaisseur ou même de 1,6mm ou même moins, avec des troisième et quatrième faces principales 13, 14 respectivement dites face F3 et face F4, la face F4 éventuellement revêtue d'une couche fonctionnelle (basse émissivité etc),
   la face F2 et la face F3 étant les faces internes 11, 11' du vitrage feuilleté
- un ensemble de diodes électroluminescentes inorganiques 4, qui sont des composants montés en surface (CMS ou SMD en anglais), par exemple émettant dans le rouge sur une carte à circuit imprimé dite carte PCB 3, l'ensemble carte PCB+diodes étant d'épaisseur totale e2+e'2≤e1 et mieux avec un delta d'au plus 0,5mm et de préférence de 0,1mm à 0,2mm, les diodes étant d'épaisseur e2 et la carte PCB 3 d'épaisseur e'2, avec une face dite avant 30 en regard de la face F3 et une face arrière 30' contre la face F2, chaque diode ayant une face émettrice émettant en direction du vitrage intérieur 1'.

Pour chacune des diodes, l'intercalaire de feuilletage en coin et en PVB a une région 22 comprend une ouverture borgne 20i logeant la diode (entourant la tranche de la diode et ici en contact de la tranche) et même le fond de paroi formant l'ouverture pouvant être en contact avec la diode 4 .

L'intercalaire de feuilletage 20 est présent entre la face F3 et la face avant de la carte PCB 3 sur toute la face avant du PCB hors diodes, dans le vitrage feuilleté. L'intercalaire de feuilletage 20 est également présent entre la face F2 et la face arrière 30'.

Les diodes (avec une seule puce semiconductrice ici) sont de forme carré de largeur de l'ordre de 5mm ou moins.

On choisit une carte PCB la plus fine possible, flexible et même de préférence la plus discrète possible (largeur minimale ou même transparence) par exemple comportant un film transparent comme un PET, PEN ou un polyimide et même pour le circuit imprimé des pistes de connexion transparentes (plutôt qu'en cuivre sauf à les faire suffisamment fines). La carte PCB dépasse de la tranche 10.

Le pare-brise comporte un cadre en émail noir 15 en face F2 et un cadre en émail noir 15' en face F4.

La figure 2a montre une vue en éclaté de ce vitrage montrant l'utilisation de trois feuillets PVB :
- le feuillet 22 par exemple PVB acoustique avec des trous traversants 20a ou en variante borgnes, la carte PCB étant contre la face arrière de ce feuillet
- le feuillet dit arrière 21 côté face arrière 30',qui peut être optionnel
- le feuillet à coin 23 plus mince dans la région basse 21a du pare-brise que dans la haute 21b

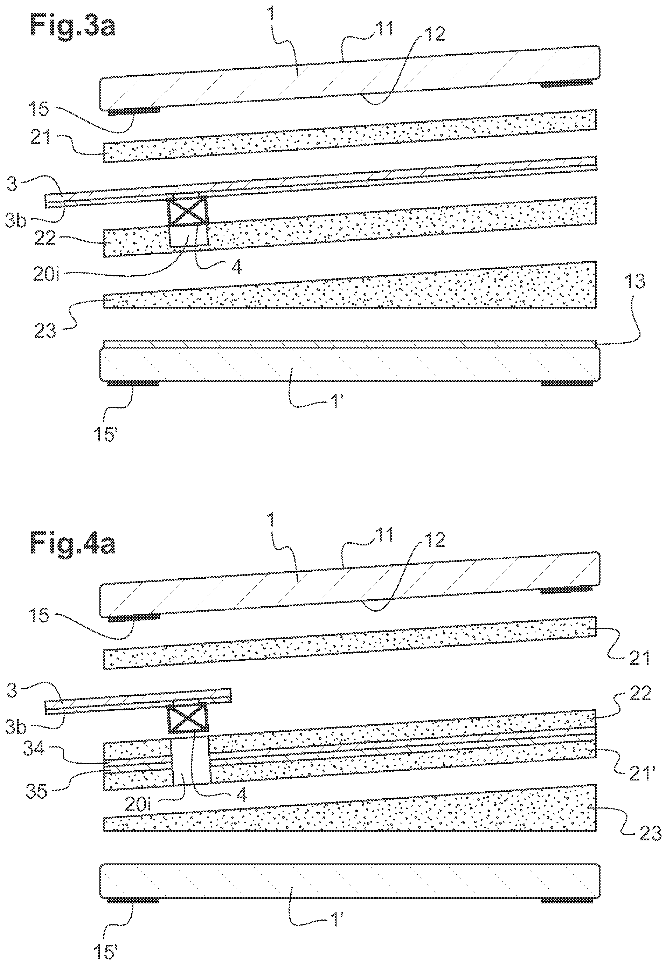

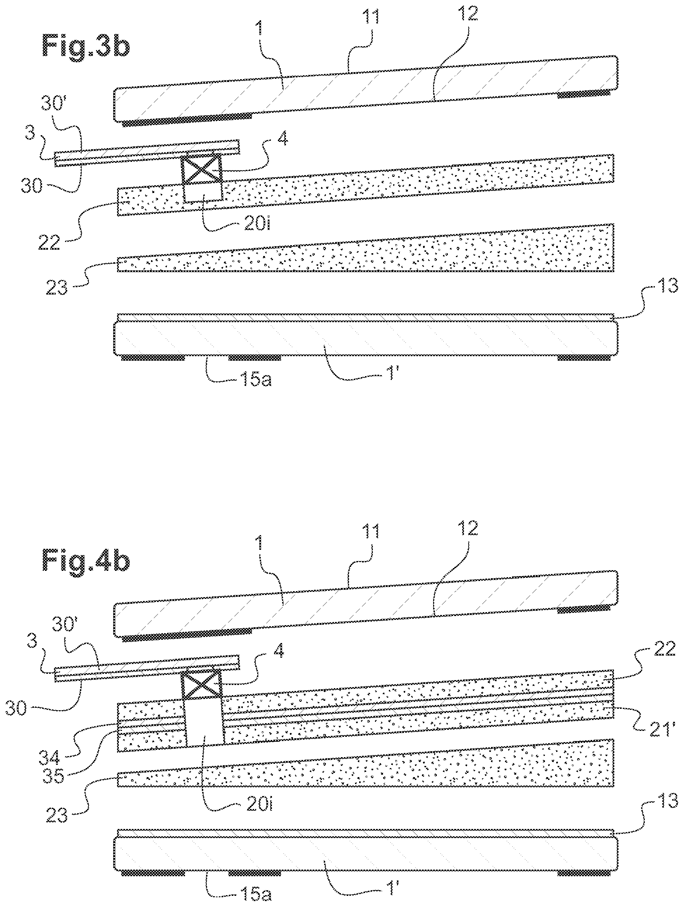

Dans une variante de la figure 2a montrée en figure 3a en vue éclatée, le support à diodes par exemple PET ou polyimide 3 avec son conducteur 3b couvre le pare-brise (fonction contrôle solaire etc), les deux feuillets de PVB 21, 22 sont donc ici disjoints. Si le feuillet central 22 est trop épais on peut faire comme ici un trou borgne 20i.

Dans une variante de la figure 2a montrée en figure 4a en vue éclatée le feuillet avec les ouvertures traversantes est un multicouches (préassemblé) par exemple PVB 22 /PET à couche fonctionnelle 34, 35/ PVB 21'.Le feuillet arrière est optionnel.

L'ouverture traversante 20i peut, comme montré ici percer, le PET 34 et la couche électroconductrice 35 (ici côté face F3 ou en variante côté face F2).

Dans une variante, l'ouverture dans le PVB 22 est borgne et laisse intègre la couche électroconductrice 35 et même le PET 34. La couche peut être sur l'autre face du Pet est rester intègre.

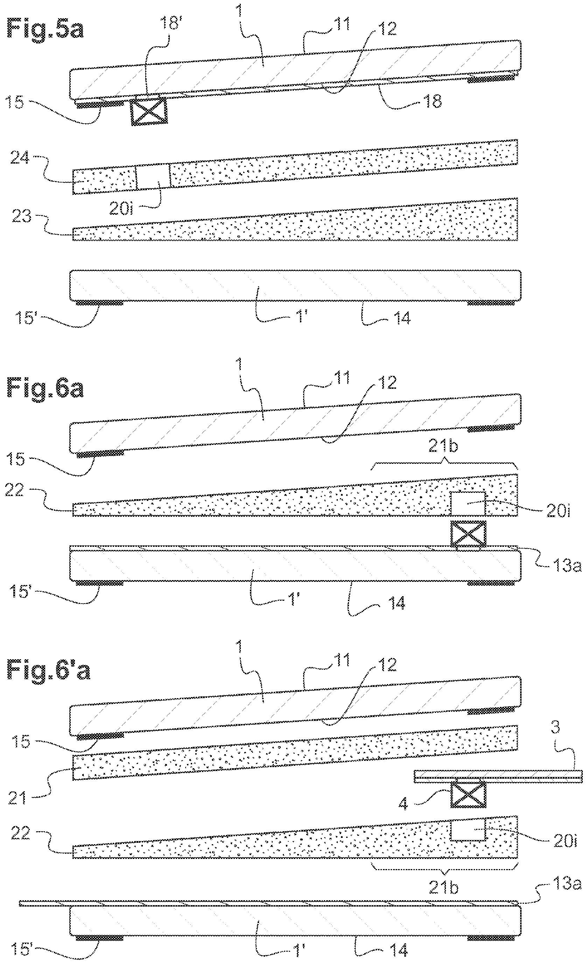

Dans une variante de la figure 2a montrée en figure 5a en vue éclatée :
- le feuillet arrière et même le support de diodes sont supprimés
- les diodes 4 sont montées en surface sur une couche 18 électroconductrice isolée 18' couvrant la face F2 (éventuellement de contrôle solaire aussi), par exemple collées ou soudées.

Dans une variante de la figure 2a montrée en figure 6a en vue éclatée :
- le feuillet arrière et même le support de diodes sont supprimés
- un seul feuillet à coin (acoustique etc) est utilisé 22 et le trou borgne 20i par exemple dans la région haute du pare-brise (ou basse si assez d'épaisseur)
- les diodes 4 sont montées en surface sur une couche 18 électroconductrice isolée 18' couvrant la face F3 (éventuellement de contrôle solaire aussi) et sont en montage inversé.

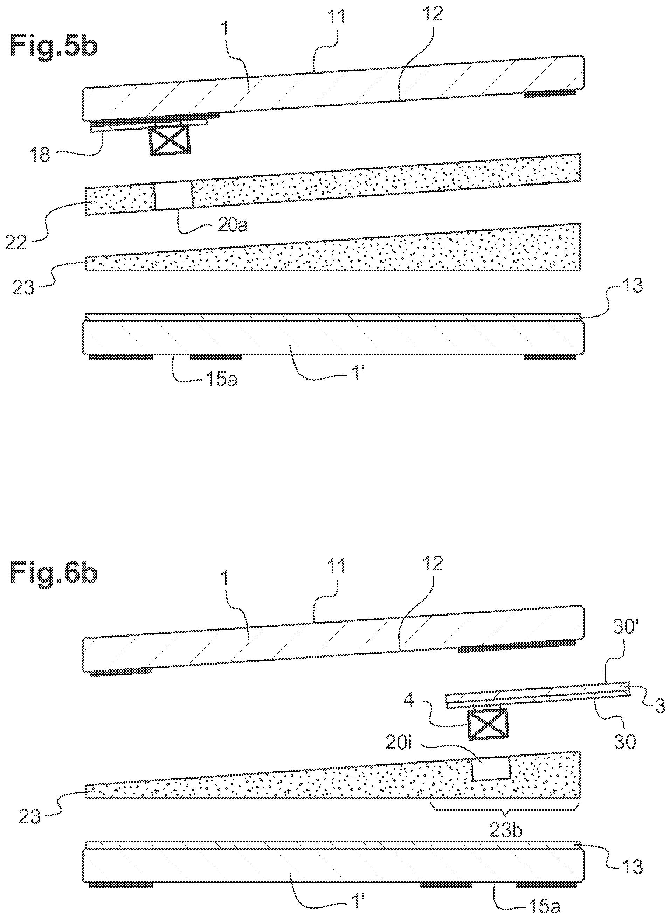

Dans une variante de la figure 2a montrée en figure 6'a en vue éclatée :
- le support de diodes est supprimé
- on utilise deux feuillets PVB 21, 22 dont le feuillet à coin (acoustique etc) porte le trou borgne 20i par exemple dans la région haute du pare-brise (ou basse si assez d'épaisseur)

Dans les variantes montrées en figure 2' (vue assemblée) ou en vue éclatée (figures 2b, 3b, 4b, 5b, 6b):
- le feuillet PVB arrière est supprimé et éventuellement remplacé par un adhésif étanche sur la face arrière 30'
- on fait une épargne 15a dans la couche émail 15' en face F4 pour laisser passer la lumière de la diode 4 plus en périphérie ici

En particulier, dans une variante de la figure 5a montrée en figure 5b en vue éclatée, la couche 18 électroconductrice (éventuellement de contrôle solaire aussi) par exemple opaque comme un émail à l'argent est sur l'émail de masquage 15.

En particulier, comme dans la figure 4a, en figure 4b le feuillet avec les ouvertures traversantes est un multicouches (préassemblé) par exemple PVB 22 /PET à couche fonctionnelle 34, 35/ PVB 21'. L'ouverture traversante 20i peut, comme montré ici percer, le PET 34 et la couche électroconductrice 35 (ici côté face F3 ou en variante côté face F2)

Dans une variante, l'ouverture dans le PVB 22 est borgne et laisse intègre la couche électroconductrice 35 et même le PET 34. La couche peut être sur l'autre face du Pet est rester intègre.

Une diode peut être de type « chip on board » ou encore tout préférentiellement un composant monté en surface (SMD en anglais) comportant alors une enveloppe périphérique (souvent dénommée « packaging »).

Dans un mode de réalisation préféré montré en figure 7 chaque diode est un composant électronique incluant au moins une puce semi-conductrice 41, et est équipée d'une enveloppe périphérique 42 (souvent dénommée « packaging »), polymérique ou céramique, encapsulant la tranche 42a du composant électronique (et définissant la tranche de la diode), entourant la puce semi-conductrice.

L'enveloppe peut correspondre à l'épaisseur maximale (hauteur) e2 de la diode. L'enveloppe est par exemple en époxy. Une enveloppe polymérique peut éventuellement se tasser (l'épaisseur finale après feuilletage peut être inférieure à l'épaisseur initiale) lors du feuilletage. L'enveloppe (polymérique) peut être opaque.

L'enveloppe (monolithique ou en deux pièces) peut comprendre une partie formant embase 42 porteuse de la puce et une partie formant réflecteur évasée en s'éloignant de l'embase plus haute que la puce, et contenant une résine de protection 43 et/ une matière à fonction de conversion de couleur. On peut définir la surface avant 40 comme la surface de cette matière couvrant la puce en retrait ou au niveau de la surface « avant » du réflecteur.

La diode peut comprendre une résine de protection ou une matière à fonction de conversion de couleur même juste sur la puce semi-conductrice. La puce-semi-conductrice peut être noyée dans une matière (résine, etc).

Les contacts 44 d'anode et de cathode sur une couche 33 isolé 33'. Les contacts sont prolongés par des « via hole » dans l'embase jusqu'à des zones de couches 44, l'une relié par un fil à la cathode.

## Revendications

1. Pare-brise feuilleté de véhicule notamment automobile pour affichage tête haute comprenant :
- - un vitrage feuilleté comportant :
- un premier vitrage (1'), formant vitrage extérieur, avec des première et deuxième faces principales (11, 12) respectivement dites face F1 et face F2
- un intercalaire de feuilletage (2) en matière polymérique, l'intercalaire de feuilletage ayant une section transversale diminuant en forme en coin du haut vers le bas du vitrage feuilleté
- un deuxième vitrage (1), formant vitrage intérieur, avec des troisième et quatrième faces principales (13, 14) respectivement dites face F3 et face F4
la face F2 et la face F3 étant les faces internes du vitrage feuilleté
- entre la face F2 et la face F3, une ou plusieurs diodes électroluminescentes inorganiques, chaque diode ayant une face émettrice (41) apte à émettre en direction de la face F3 une lumière de signalisation, et chaque diode ayant une tranche, chaque diode étant d'épaisseur e2 submillimétrique
- pour chaque diode, l'intercalaire de feuilletage comprend une ouverture borgne entourant la tranche de la diode
- les diodes (4) sont des composants montés en surface sur la face avant d'un support de diodes flexible d'épaisseur e'2 d'au plus 0,2mm, le support de diodes flexible étant collé à la face F2 par un adhésif (6) étanche à l'eau liquide d'épaisseur d'au plus 0,1mm ou par un intercalaire de feuilletage étant entre la face arrière du support de diodes flexible et la face F2, le support de diodes dépassant de la tranche du vitrage feuilleté.

2. Pare-brise feuilleté de véhicule selon la revendication précédente **caractérisé en ce que** l'épaisseur restante Hf entre et le fond de l'ouverture borgne et la face opposée est de préférence d'au moins 0,1mm et même d'au moins 0,2mm et de préférence d'au plus 0,5mm et de préférence la diode est en contact avec le fond de l'ouverture borgne ou espacé du fond d'au plus 0,2mm ou d'au plus 0,1mm.

3. Pare-brise feuilleté de véhicule selon l'une des revendications précédentes **caractérisé en ce que** les parois d'une ouverture borgne de l'intercalaire de feuilletage (2) sont espacées d'au plus 0,5mm mieux d'au plus 0,1mm de la tranche de la diodes (4) et même sont en contact avec la tranche de la diode.

4. Pare-brise feuilleté de véhicule selon l'une des revendications précédentes **caractérisé en ce que** l'intercalaire de feuilletage comporte un poly(vinyl butyral) (PVB) éventuellement acoustique, ou un élément composite PVB/film plastique ou PVB/film plastique/PVB, le film plastique, de préférence un PET, étant de préférence porteur d'une couche fonctionnelle, notamment d'une couche électroconductrice.

5. Pare-brise feuilleté de véhicule selon l'une des revendications précédentes **caractérisé en ce que** l'intercalaire de feuilletage comporte un élément composite PVB/film plastique ou PVB/film plastique/PVB, le film plastique, de préférence un PET, étant porteur d'une couche fonctionnelle, notamment d'une couche électroconductrice, et la couche électroconductrice est pleine voire même le film plastique,.

6. Pare-brise feuilleté de véhicule selon l'une des revendications précédentes **caractérisé en ce que** l'intercalaire de feuilletage (2) comporte voire est un PVB avec e1 allant de 0,5 à 0,9mm, le support de diodes flexible est d'épaisseur e'2 de préférence d'au plus 0,15mm.

7. Pare-brise feuilleté de véhicule selon l'une quelconque des revendications précédentes **caractérisé en ce que** le support de diodes flexible est collé par l'adhésif (6) étanche à l'eau liquide d'épaisseur d'au plus 0,05mm, notamment un adhésif double face.

8. Pare-brise feuilleté de véhicule selon l'une des revendications 1 à 7 **caractérisé en ce que** la ou les diodes sont en partie basse du pare-brise notamment hors d'une zone d'affichage tête haute, notamment en périphérie de la zone d'affichage tête haute.

9. Pare-brise feuilleté de véhicule selon l'une des revendications 1 à 8 **caractérisé en ce que** le support de diodes flexible présente une face arrière coté face F2, la ou les diodes (4) sont disposées dans une région du pare-brise dans laquelle le vitrage extérieur est opaque par une couche opaque notamment en émail de préférence en F2 et/ou dans laquelle le vitrage intérieur est opaque par une couche opaque notamment en émail de préférence en F4 et comportant alors au moins une épargne au droit des diodes.

10. Pare-brise feuilleté de véhicule selon l'une des revendications 1 à 9 **caractérisé en ce que** la signalisation lumineuse par la ou les diodes est un moyen anti collision et/ou la ou l'une des diodes est un indicateur lumineux d'un interrupteur tactile de préférence capacitif entre F2 et F3 ou sur la face F4.

11. Véhicule comportant au moins un pare-brise feuilleté selon l'une quelconque des revendications précédentes.

12. Procédé de fabrication du pare-brise feuilleté selon l'une des revendications 1 à 10 **caractérisé en ce qu'**il comporte les étapes suivantes:
- découpe notamment automatique d'un premier feuillet d'intercalaire de feuilletage de préférence en PVB d'épaisseur constante de préférence d'au plus 0,9mm pour former une ou des ouvertures de préférence traversantes locales notamment dans la région basse du pare-brise, la ou les diodes (4) sont des composants montés en surface de préférence sur une face dite avant côté face F3 du support de diodes flexible, avec la face avant contre le premier feuillet
- -fourniture d'un deuxième feuillet d'intercalaire de feuilletage, de préférence en PVB, ayant une section transversale diminuant en forme en coin du haut vers le bas du vitrage feuilleté, deuxième feuillet de préférence plus proche de la face F3 et en contact avec le premier feuillet,
- assemblage du vitrage feuilleté, avec des ouvertures borgnes plus larges que la taille des diodes de préférence plus grandes d'au plus 0,5mm ou même d'au plus 0,1mm, le support de diodes dépasse de la tranche du vitrage feuilleté.

13. Procédé de fabrication d'un pare-brise feuilleté selon la revendication précédente **caractérisé en ce qu'**avant l'assemblage, la ou les diodes sont dans des ouvertures traversantes du premier feuillet d'intercalaire et sont notamment en surépaisseur du premier feuillet d'au plus 0,2mm ou même d'au plus 0,1mm ou en retrait dans l'ouverture d'au plus 0,5mm et même d'au plus 0,3mm ou 0,2mm.

14. Procédé de fabrication d'un pare-brise feuilleté selon l'une des revendications 1 à 10 **caractérisé en ce qu'**il comporte les étapes suivantes:
- découpe notamment automatique d'un premier feuillet d'intercalaire de préférence en PVB ayant une section transversale diminuant en forme en coin du haut vers le bas du vitrage feuilleté, de préférence d'au plus 0,9mm et supérieure à e2 pour former une ou des ouvertures borgnes notamment dans la région haute du pare-brise, la ou les diodes (4) sont des composants montés en surface de préférence sur une face dite avant côté face F3 du support de diodes flexible, avec la face avant contre le premier feuillet
- assemblage du vitrage feuilleté, notamment avec des ouvertures plus larges que la taille des diodes de préférence plus grandes d'au plus 0,5mm ou même d'au plus 0,1mm, le support de diodes dépasse de la tranche du vitrage feuilleté.

15. Procédé de fabrication du pare-brise feuilleté selon l'une des revendications 12 ou 14 **caractérisé en ce que** le premier feuillet de préférence PVB est éventuellement acoustique et/ou teinté ou préassemblé PVB/film plastique fonctionnel tel que PET fonctionnel avec une éventuelle couche électroconductrice ou PVB/ film plastique fonctionnel tel que PET fonctionnel avec une éventuelle couche électroconductrice /PVB, le deuxième feuillet éventuel est clair ou extraclair, notamment le film plastique fonctionnel est de préférence d'épaisseur d'au plus 0,2mm et même d'au plus 0,1mm encore d'au plus 0,05mm.

16. Procédé de fabrication du pare-brise feuilleté selon la revendication 15 **caractérisé en ce que** le premier feuillet est un multifeuillet préassemblé PVB/film plastique comportant une couche électroconductrice /PVB, on réalise la ou les ouvertures borgnes dans l'un des PVB sans atteindre la couche électroconductrice voire même sans atteindre le film plastique.

## Patentansprüche

1. Verbundglas-Windschutzscheibe eines Fahrzeugs, insbesondere eines Kraftfahrzeugs, für eine Head-up-Anzeige, umfassend:
- - eine Verbundverglasung, die aufweist:
- eine erste Verglasung (1'), die eine Außenverglasung bildet, mit einer ersten und einer zweiten Hauptfläche (11, 12), die jeweils als Fläche F1 und Fläche F2 bezeichnet werden
- eine Verbundzwischenlage (2) aus polymerem Material, wobei die Verbundzwischenlage einen von oben nach unten keilförmig abnehmenden Querschnitt der Verbundverglasung vorweist
- eine zweite Verglasung (1), die eine Innenverglasung bildet, mit einer dritten und einer vierten Hauptfläche (13, 14), die jeweils als Fläche F3 und Fläche F4 bezeichnet werden
wobei die Fläche F2 und die Fläche F3 die Innenflächen der Verbundverglasung sind
- wobei zwischen der Fläche F2 und der Fläche F3 eine oder mehrere anorganische Leuchtdioden sind, wobei jede Diode eine Emissionsfläche (41) vorweist, die geeignet ist, in Richtung der Fläche F3 ein Signallicht zu emittieren, und jede Diode eine Kante vorweist, wobei jede Diode eine Dicke e2 im Submillimeterbereich besitzt
- wobei die Verbundzwischenlage für jede Diode ein Sackloch umfasst, das die Kante der Diode umgibt
- wobei die Dioden (4) oberflächenmontierte Bauelemente auf der Vorderseite eines flexiblen Diodenträgers mit einer Dicke e'2 von höchstens 0,2 mm sind, wobei der flexible Diodenträger mit der Fläche F2 durch ein flüssigwasserdichtes Haftmittel (6) mit einer Dicke von höchstens 0,1 mm oder durch eine Verbundzwischenlage verklebt ist, die sich zwischen der Rückseite des flexiblen Diodenträgers und der Fläche F2 befindet, wobei der Diodenträger über die Kante der Verbundverglasung hinausragt.

2. Verbundglas-Windschutzscheibe eines Fahrzeugs nach dem vorstehenden Anspruch, **dadurch gekennzeichnet, dass** die verbleibende Dicke Hf zwischen dem Boden des Sacklochs und der gegenüberliegenden Fläche vorzugsweise mindestens 0,1 mm und sogar mindestens 0,2 mm und vorzugsweise höchstens 0,5 mm beträgt und vorzugsweise die Diode mit dem Boden des Sacklochs in Kontakt steht oder von dem Boden höchstens 0,2 mm oder höchstens 0,1 mm beabstandet ist.

3. Verbundglas-Windschutzscheibe eines Fahrzeugs nach einem der vorstehenden Ansprüche, **dadurch gekennzeichnet, dass** die Wände eines Sacklochs der Verbundzwischenlage (2) um höchstens 0,5 mm, besser um höchstens 0,1 mm von der Kante der Diode (4) beabstandet sind und sogar mit der Kante der Diode in Kontakt sind.

4. Verbundglas-Windschutzscheibe eines Fahrzeugs nach einem der vorstehenden Ansprüche, **dadurch gekennzeichnet, dass** die Verbundzwischenlage ein gegebenenfalls akustisches Poly(vinylbutyral) (PVB) oder ein Verbundelement aus PVB/Kunststofffolie oder aus PVB/Kunststofffolie/PVB aufweist, wobei die Kunststofffolie, vorzugsweise ein PET, vorzugsweise Träger einer Funktionsschicht, insbesondere einer elektrisch leitfähigen Schicht, ist.

5. Verbundglas-Windschutzscheibe eines Fahrzeugs nach einem der vorstehenden Ansprüche, **dadurch gekennzeichnet, dass** die Verbundzwischenlage ein Verbundelement aus PVB/Kunststofffolie oder aus PVB/Kunststofffolie/PVB aufweist, wobei die Kunststofffolie, vorzugsweise ein PET, Träger einer Funktionsschicht, insbesondere einer elektrisch leitfähigen Schicht, ist und die elektrisch leitfähige Schicht oder sogar die Kunststofffolie vollflächig ist.

6. Verbundglas-Windschutzscheibe eines Fahrzeugs nach einem der vorstehenden Ansprüche, **dadurch gekennzeichnet, dass** die Verbundzwischenlage (2) ein PVB mit e1 von 0,5 bis 0,9 mm aufweist, sogar ist, und der flexible Diodenträger eine Dicke e'2 von vorzugsweise höchstens 0,15 mm besitzt.

7. Verbundglas-Windschutzscheibe eines Fahrzeugs nach einem der vorstehenden Ansprüche, **dadurch gekennzeichnet, dass** der flexible Diodenträger durch das flüssigwasserdichte Haftmittel (6) mit einer Dicke von höchstens 0,05 mm, insbesondere ein doppelseitiges Haftmittel, verklebt ist.

8. Verbundglas-Windschutzscheibe eines Fahrzeugs nach einem der Ansprüche 1 bis 7, **dadurch gekennzeichnet, dass** die Diode oder die Dioden in dem unteren Teil der Windschutzscheibe insbesondere außerhalb eines Head-up-Anzeigegebiets, insbesondere an dem Rand des Head-up-Anzeigegebiets, angeordnet ist/sind.

9. Verbundglas-Windschutzscheibe eines Fahrzeugs nach einem der Ansprüche 1 bis 8, **dadurch gekennzeichnet, dass** der flexible Diodenträger eine Rückseite an der Fläche F2 vorweist, die Diode oder die Dioden (4) in einem Bereich der Windschutzscheibe angeordnet ist/sind, in dem die Außenverglasung durch eine opake Schicht, insbesondere aus Emaille, vorzugsweise in F2, opak ist und/oder in dem die Innenverglasung durch eine opake Schicht, insbesondere aus Emaille, vorzugsweise in F4, opak ist und dann mindestens eine Aussparung direkt unter den Dioden aufweist.

10. Verbundglas-Windschutzscheibe eines Fahrzeugs nach einem der Ansprüche 1 bis 9, **dadurch gekennzeichnet, dass** die Lichtsignalisierung durch die Diode oder die Dioden ein Antikollisionsmittel ist und/oder die Diode oder eine der Dioden eine Leuchtanzeige eines taktilen, vorzugsweise kapazitiven Schalters zwischen F2 und F3 oder auf der Fläche F4 ist.

11. Fahrzeug, aufweisend mindestens eine Verbundglas-Windschutzscheibe nach einem der vorstehenden Ansprüche.

12. Verfahren zum Herstellen der Verbundglas-Windschutzscheibe nach einem der Ansprüche 1 bis 10, **dadurch gekennzeichnet, dass** es die folgenden Schritte aufweist:
insbesondere automatisches Schneiden eines ersten Blatts einer Verbundzwischenlage, vorzugsweise aus PVB, mit einer konstanten Dicke von vorzugsweise höchstens 0,9 mm, um eine oder mehrere vorzugsweise lokale durchgehende Löcher insbesondere in dem unteren Bereich der Windschutzscheibe zu bilden, wobei die Diode oder die Dioden (4) oberflächenmontierte Bauelemente ist/sind, vorzugsweise auf einer so genannten Vorderseite auf der Fläche F3 des flexiblen Diodenträgers, wobei die Vorderseite gegen das erste Blatt anliegt
- Bereitstellen eines zweiten Blatts einer Verbundzwischenlage, vorzugsweise aus PVB, das einen von oben nach unten keilförmig abnehmenden Querschnitt der Verbundverglasung vorweist, wobei das zweite Blatt vorzugsweise näher an der Fläche F3 liegt und mit dem ersten Blatt in Kontakt ist,
- Zusammensetzen der Verbundverglasung, mit Sacklöchern, die größer als die Größe der Dioden sind, vorzugsweise größer als höchstens 0,5 mm oder sogar höchstens 0,1 mm, wobei der Diodenträger über die Kante der Verbundverglasung hinausragt.

13. Verfahren zum Herstellen einer Verbundglas-Windschutzscheibe nach dem vorstehenden Anspruch, **dadurch gekennzeichnet, dass** sich die Diode oder die Dioden vor dem Zusammensetzen in durchgehenden Löcher des ersten Zwischenlagenblatts befinden und insbesondere das erste Blatt um höchstens 0,2 mm oder sogar um höchstens 0,1 mm in der Dicke überragen oder in dem Loch um höchstens 0,5 mm und sogar um höchstens 0,3 mm oder 0,2 mm zurückgesetzt sind.

14. Verfahren zum Herstellen einer Verbundglas-Windschutzscheibe nach einem der Ansprüche 1 bis 10, **dadurch gekennzeichnet, dass** es die folgenden Schritte aufweist:
- insbesondere automatisches Schneiden eines ersten Blatts einer Verbundzwischenlage, vorzugsweise aus PVB, das einen von oben nach unten keilförmig abnehmenden Querschnitt der Verbundverglasung, vorzugsweise von höchstens 0,9 mm und größer als e2, vorweist, um ein oder mehrere Sacklöcher insbesondere in dem oberen Bereich der Windschutzscheibe zu bilden, wobei die Diode oder die Dioden (4) oberflächenmontierte Bauelemente ist/sind, vorzugsweise auf einer so genannten Vorderseite auf der Fläche F3 des flexiblen Diodenträgers, wobei die Vorderseite gegen das erste Blatt anliegt
- Zusammensetzen der Verbundverglasung, insbesondere mit Löcher, die größer als die Größe der Dioden sind, vorzugsweise größer als höchstens 0,5 mm oder sogar höchstens 0,1 mm, wobei der Diodenträger über die Kante der Verbundverglasung hinausragt.

15. Verfahren zum Herstellen der Verbundglas-Windschutzscheibe nach einem der Ansprüche 12 oder 14, **dadurch gekennzeichnet, dass** das erste Blatt, vorzugsweise PVB, gegebenenfalls akustisch und/oder getönt oder vormontiert aus PVB/funktioneller Kunststofffolie wie funktionelles PET mit einer gegebenenfalls elektrisch leitfähigen Schicht oder aus PVB/funktioneller Kunststofffolie wie funktionelles PET mit einer gegebenenfalls elektrisch leitfähigen Schicht/PVB ist, wobei das gegebenenfalls zweite Blatt klar oder extraklar ist, wobei insbesondere die funktionelle Kunststofffolie vorzugsweise eine Dicke von höchstens 0,2 mm und sogar höchstens 0,1 mm oder sogar höchstens 0,05 mm aufweist.

16. Verfahren zum Herstellen der Verbundglas-Windschutzscheibe nach Anspruch 15, **dadurch gekennzeichnet, dass** das erste Blatt ein vormontiertes Multiblatt aus PVB/Kunststofffolie ist, das eine elektrisch leitfähige Schicht/PVB aufweist, wobei das Sackloch oder die Sacklöcher in einem der PVB hergestellt wird/werden, ohne die elektrisch leitfähige Schicht zu erreichen oder sogar ohne die Kunststofffolie zu erreichen.

## Claims

1. A vehicle, in particular automobile, laminated windshield for head-up display, comprising:
- a laminated glazing comprising:
- a first glazing (1'), forming an exterior glazing, with first and second main faces (11, 12) respectively called face F1 and face F2,
- a lamination interlayer (2) made of polymeric material, the lamination interlayer having a cross section which decreases in wedge shape from the top toward the bottom of the laminated glazing,
- a second glazing (1), forming an interior glazing, with third and fourth main faces (13, 14) respectively called face F3 and face F4,
the face F2 and the face F3 being the internal faces of the laminated glazing,
- between the face F2 and the face F3, one or more inorganic light-emitting diodes, each diode having an emitting face (41) capable of emitting, in the direction of the face F3, a signaling light, and each diode having an edge face, each diode being of submillimetric thickness e2,
- for each diode, the lamination interlayer comprises a blind aperture surrounding the edge face of the diode
the diodes (4) are surface mount devices mounted on the front face of a flexible diode carrier of thickness e'2 of at most 0.2 mm, the flexible diode carrier is bonded to the face F2, by an adhesive (6) which is leaktight to liquid water of thickness of at most 0.1 mm or by lamination interlayer being between rear face of the flexible support carrier and the face F2,, the diode carrier protrudes from the edge face of the laminated glazing.

2. The vehicle laminated windshield as claimed in the preceding claim, **characterized in that** the remaining thickness Hf between and the bottom of the blind aperture and the opposite face is preferably at least 0.1 mm and even at least 0.2 mm and preferably at most 0.5 mm and preferably the diode is in contact with the bottom of the blind aperture or spaced out from the bottom by at most 0.2 mm or by at most 0.1 mm.

3. The vehicle laminated windshield as claimed in either of the preceding claims, **characterized in that** the walls of a blind aperture of the lamination interlayer (2) are spaced out by at most 0.5 mm and better still by at most 0.1 mm from the edge face of the diode (4) and even are in contact with the edge face of the diode.

4. The vehicle laminated windshield as claimed in one of the preceding claims, **characterized in that** the lamination interlayer comprises an optionally acoustic poly(vinyl butyral) (PVB), or a composite PVB/plastic film or PVB/plastic film/PVB element, the plastic film, preferably a PET, preferably carrying a functional layer, in particular an electrically conductive layer.

5. The vehicle laminated windshield as claimed in one of the preceding claims, **characterized in that** the lamination interlayer comprises a composite PVB/plastic film or PVB/plastic film/PVB element, the plastic film, preferably a PET, carrying a functional layer, in particular an electrically conductive layer, and the electrically conductive layer is entire, indeed even the plastic film.

6. The vehicle laminated windshield as claimed in one of the preceding claims, **characterized in that** the lamination interlayer (2) comprises, indeed is, a PVB with e1 ranging from 0.5 to 0.9 mm, the flexible diode carrier is of the thickness e'2 preferably of at most 0.15 mm;.

7. The vehicle laminated windshield as claimed in any one of the preceding claims, **characterized in that** the flexible diode carrier is bonded by an adhesive (6) which is leaktight to liquid water, of thickness of at most 0.05 mm, in particular a double-sided adhesive tape.

8. The vehicle laminated windshield as claimed in one of claims 1 to 7, **characterized in that** the diode or diodes are in the bottom part of the windshield, in particular outside a head-up display zone, in particular at the periphery of the head-up display zone.

9. The vehicle laminated windshield as claimed in one of claims 1 to 8, **characterized in that** the flexible diode carrier has a back face of which is F2 face side, and the diode or diodes (4) are positioned in a region of the windshield in which the exterior glazing is rendered opaque by an opaque layer in particular made of enamel, preferably in F2, and/or in which the interior glazing is rendered opaque by an opaque layer in particular made of enamel, preferably in F4, and then comprising at least one gap in line with the diodes.

10. The vehicle laminated windshield as claimed in one of claims 1 to 9, **characterized in that** the luminous signaling by the diode or diodes is an anticollision means and/or the or one of the diodes is a luminous indicator of a touch on/off switch, preferably capacitive, between F2 and F3 or on the face F4.

11. A vehicle comprising at least one laminated windshield as claimed in any one of the preceding claims.

12. A process for the manufacture of the laminated windshield as claimed in one of claims 1 to 10, **characterized in that** it comprises the following stages:
- cutting out, in particular automatic cutting out, of a first sheet of lamination interlayer, preferably made of PVB, of unvarying thickness, preferably of at most 0.9 mm, in order to form one or more local apertures, preferably through apertures, in particular in the bottom region of the windshield, the diode or diodes (4) are surface mount devices mounted preferably on a "front" face, F3 face side, of a flexible diode carrier, with the front face against the first sheet,
- provision of a second sheet of lamination interlayer, preferably made of PVB, having a cross section decreasing in wedge shape from the top toward the bottom of the laminated glazing, which second sheet is preferably closer to the face F3 and in contact with the first sheet,
- assembling the laminated glazing, with blind apertures which are wider than the size of the diodes, preferably wider by at most 0.5 mm or even by at most 0.1 mm, the diode carrier protrudes from the edge face of the laminated glazing.

13. The process for the manufacture of a laminated windshield as claimed in the preceding claim, **characterized in that**, before the assembling, the diode or diodes are in through apertures of the first interlayer sheet and are in particular thicker than the first sheet by at most 0.2 mm or even by at most 0.1 mm or set back in the aperture by at most 0.5 mm and even by at most 0.3 mm or 0.2 mm.

14. A process for the manufacture of a laminated windshield as claimed in one of claims 1 to 10, **characterized in that** it comprises the following stages:
- cutting out, in particular automatic cutting out, of a first interlayer sheet, preferably made of PVB, having a cross section which decreases in wedge shape from the top toward the bottom of the laminated glazing, preferably of at most 0.9 mm and greater than e2, in order to form one or more blind apertures, in particular in the top region of the windshield, the diode or diodes (4) are surface mount devices mounted preferably on a "front" face, F3 face side, of a flexible diode carrier, with the front face against the first sheet,
- assembling the laminated glazing, in particular with apertures which are wider than the size of the diodes, preferably wider by at most 0.5 mm or even by at most 0.1 mm, the diode carrier protrudes from the edge face of the laminated glazing.

15. The process for the manufacture of the laminated windshield as claimed in either of claims 12 or 14, **characterized in that** the first sheet, preferably PVB, is optionally acoustic and/or tinted or preassembled PVB/functional plastic film, such as functional PET, with an optional electrically conductive layer, or PVB/functional plastic film, such as functional PET, with an optional electrically conductive layer/PVB; the optional second sheet is clear or extra-clear; in particular, the functional plastic film is preferably of thickness of at most 0.2 mm and even of at most 0.1 mm or also of at most 0.05 mm.

16. The process for the manufacture of the laminated windshield as claimed in claim 15, **characterized in that** the first sheet is a preassembled PVB/plastic film comprising an electrically conductive layer/PVB multisheet, and the blind aperture or apertures are produced in one of the PVBs without reaching the electrically conductive layer, indeed even without reaching the plastic film.
